# EUROPEAN PATENT APPLICATION

(11) **EP 4 755 199 A1**
(43) Date of publication of application: **10.06.2026**
(21) Application number: 24851771.6
(22) Date of filing: 02.08.2024
(51) Int. Cl.: A23L 2/00, A23L 2/02, A23L 2/52, A23L 2/54, A23L 2/60

(54) **BEVERAGE CONTAINING CINNAMIC ACID, CINNAMIC ACID DERIVATIVE OR COMBINATION THEREOF**

(30) Priority: 04.08.2023 JP 2023128030
(71) Applicant: Suntory Holdings Limited, Osaka-shi, Osaka 530-8203 (JP)
(72) Inventor: KATO, Hiroyuki, Kawasaki-shi, Kanagawa 211-0067 (JP); STEVENSON, Lesley, Auckland, 2104 (NZ); TAYLOR-SMITH, Megan, Auckland, 2104 (NZ); PURDY, Victoria, Auckland, 2104 (NZ)
(74) Representative: V.O.
(86) International application number: PCT/JP2024/027728
(87) International publication number: WO 2025/033346

(57) **Abstract**

Provided is a beverage that enables improvement of an unpleasant sensation of sweetness that remains on the tongue and/or a reduction in the sensation of refreshness. According to one embodiment of the present invention, provided is a beverage that contains: cinnamic acid, a cinnamic acid derivative, or a combination thereof; an acidifier; and a sweetener; wherein the content of at least one of the cinnamic acid, the cinnamic acid derivative, or a combination thereof is 0.01-4 mg/100 g, and the acidity in terms of citric acid is 0.65-2.5 g/100 g.

## Description

### Technical Field

The present invention relates to a beverage containing a cinnamic acid, a cinnamic acid derivative, or a combination thereof, an acidulant, and a sweetener; a method for producing the beverage; and the like. The present invention further relates to a method for improving the taste quality of a beverage containing a sweetener using a cinnamic acid, a cinnamic acid derivative, or a combination thereof, and an acidulant; and the like.

### Background Art

To date, various beverages have been developed and marketed adapting to consumer preferences. Among them, many attempts have been made to alleviate a negative taste quality of beverages. For example, JP 2008-050349 A (Patent Literature 1) discloses that, even when a beverage is blended with a high concentration of a branched-chain amino acid, development of unpleasant odor over time is prevented or reduced by blending (a) a branched-chain amino acid at a concentration of 110 mg/50 mL or more and (b) one or more selected from bupleurum root, Eucommia ulmoides, Chinese dodder seed, cistanche herb, and cinnamon bark at a concentration of 50 mg/50 mL or more in terms of crude drug. JP 2006-296324 A (Patent Literature 2) discloses that adding black vinegar, sodium chloride, and honey to a herb extract health beverage prevents or reduces its characteristic strong taste and the like.

### Citation List

### Patent Literature

Patent Literature 1: JP 2008-050349 A
Patent Literature 2: JP 2006-296324 A

### Summary of Invention

### Technical Problem

In a beverage containing a sweetener (in particular, a beverage with a high sweetness intensity), discomfort may remain on the tongue after drinking, or refreshing sensation of the beverage may decrease. Thus, there is a need for new beverages that reduce such a negative taste quality.

### Solution to Problem

The present inventors have found that at least one of the above negative taste qualities can be alleviated by adding a predetermined amount of a cinnamic acid, a cinnamic acid derivative, or a combination thereof, and a predetermined amount of an acidulant to a beverage containing a sweetener. The present invention is based on such a finding.

The present invention includes, for example, inventions of the following embodiments.
[1] A beverage containing:
   a cinnamic acid, a cinnamic acid derivative, or a combination thereof;
   an acidulant; and
   a sweetener, in which
   a content of at least one of the cinnamic acid, the cinnamic acid derivative, or the combination thereof is from 0.01 to 4 mg/100 g, and
   an acidity is from 0.65 to 2.5 g/100 g in terms of citric acid.
[2] A beverage containing:
   a cinnamic acid, a cinnamic acid derivative, or a combination thereof;
   an acidulant; and
   a sweetener, in which
   a content of at least one of the cinnamic acid, the cinnamic acid derivative, or the combination thereof is from 2.1 to 4 mg/100 g, and
   an acidity is from 0.20 to 0.65 g/100 g in terms of citric acid.
[3] The beverage according to [1], in which
   a content of at least one of the cinnamic acid, the cinnamic acid derivative, or a combination thereof is from 0.15 to 2 mg/100 g, and
   an acidity is from 0.65 to 1 g/100 g in terms of citric acid.
[4] The beverage according to any of [1] to [3], in which the beverage has a sweetness intensity of 3 to 20 in terms of sucrose equivalent value.
[5] The beverage according to [1], [3], or [4], containing one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a total content of the one or more of the cinnamic acid, the cinnamic acid derivative, or the combination thereof is from 0.01 to 4 mg/100 g.
[6] The beverage according to [2] or [4], containing one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a total content of the one or more of the cinnamic acid, the cinnamic acid derivative, or the combination thereof is from 2.1 to 4 mg/100 g.
[7] The beverage according to any of [1] to [6], further containing 5 mg/100 g or more of caffeine.
[8] The beverage according to any of [1] to [7], further containing 0.4 mg/100 g or more of vitamin B2.
[9] The beverage according to any of [1] to [8], further containing 0.1 mg/100 g or more of vitamin B6.
[10] The beverage according to any of [1] to [9], wherein the beverage is a carbonated beverage, an energy beverage, or a fruit juice beverage.
[11] The beverage according to any of [1] to [10], containing citric acid.
[12] The beverage according to any of [1] to [11], wherein the beverage is a packaged beverage.
[13] A method for alleviating discomfort with sweetness remaining on the tongue, the method including:
   adding, to a beverage containing a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 to 4 mg/100 g based on a total weight of the beverage; and
   adding an acidulant to the beverage such that the beverage has an acidity of 0.65 to 2.5 g/100 g in terms of citric acid.
[14] A method for improving refreshing sensation, the method including:
   adding, to a beverage containing a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 to 4 mg/100 g based on a total weight of the beverage; and
   adding an acidulant to the beverage such that the beverage has an acidity of 0.65 to 2.5 g/100 g in terms of citric acid.
[15] A beverage containing:
   one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
   an acidulant; and
   a sweetener, in which
   a content of the one or more of the cinnamic acid, the cinnamic acid derivative, or the combination thereof is from 0.01 to 4 mg/100 g, and
   an acidity is from 0.65 to 2.5 g/100 g in terms of citric acid.
[16] A beverage containing:
   one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
   an acidulant; and
   a sweetener, in which
   a content of the one or more of the cinnamic acid, the cinnamic acid derivative, or the combination thereof is from 2.1 to 4 mg/100 g, and
   an acidity is from 0.20 to 0.65 g/100 g in terms of citric acid.

### Advantageous Effects of Invention

According to one embodiment of the present invention, there is provided a beverage that alleviates at least one of discomfort with sweetness remaining on the tongue or a decrease in refreshing sensation. In addition, according to another embodiment of the present invention, there is provided a method for alleviating discomfort with sweetness remaining on the tongue and/or a decrease in refreshing sensation of a beverage containing a sweetener.

### Description of Embodiments

Hereinafter, the present invention will be described in detail. The following embodiments are examples for explaining the present invention and are not intended to limit the present invention only to these embodiments. The present invention can be implemented in various forms without departing from the gist of the present invention.

All literatures, patent application publications, patent publications, and other patent literatures cited in the present specification are incorporated herein by reference. In addition, the present specification incorporates the contents described in the specification of the Japanese Patent Application (JP 2023-128030) filed on August 4, 2023, which serves as a basis for priority claim of the present application.

### 1. Beverage

The present invention provides, as one aspect, a beverage (hereinafter also referred to as "the beverage of the present invention") containing:
a predetermined amount of a cinnamic acid, a cinnamic acid derivative, or a combination thereof; and
predetermined amounts of an acidulant and a sweetener. Furthermore, according to a first embodiment of the present invention, there is provided a beverage containing:
   a cinnamic acid, a cinnamic acid derivative, or a combination thereof;
   an acidulant; and
   a sweetener, in which
   a content of at least one of the cinnamic acid, the cinnamic acid derivative, or the combination thereof is from 0.01 to 4 mg/100 g, and
   an acidity is from 0.65 to 2.5 g/100 g in terms of citric acid. According to a second embodiment of the present invention, there is provided a beverage containing:
      a cinnamic acid, a cinnamic acid derivative, or a combination thereof;
      an acidulant; and
      a sweetener, in which
      a content of at least one of the cinnamic acid, the cinnamic acid derivative, or the combination thereof is from 2.1 to 4 mg/100 g, and
      an acidity is from 0.20 to 0.65 g/100 g in terms of citric acid. According to a third embodiment of the present invention, there is provided a beverage containing:
         one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
         an acidulant; and
         a sweetener, in which
         a content of the one or more of the cinnamic acid, the cinnamic acid derivative, or the combination thereof is 0.01 mg/100 g or more and less than 5 mg/100 g, and
         an acidity is from 0.65 to 2.5 g/100 g in terms of citric acid. According to a fourth embodiment of the present invention, there is provided a beverage containing:
            one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
            an acidulant; and
            a sweetener, in which
            a content of the one or more of the cinnamic acid, the cinnamic acid derivative, or the combination thereof is 2.1 mg/100 g or more and less than 5 mg/100 g, and
            an acidity is from 0.20 to 0.65 g/100 g in terms of citric acid.

Hereinafter, specific embodiments will be described for the first to fourth embodiments of the present invention, but the following embodiments correspond to any of the first to fourth embodiments unless otherwise specified.

### Beverage

In the present specification, "beverage" means a drinkable liquid or liquid food and includes a food partially in a gel or sol state. The beverage may be either an alcoholic beverage or a non-alcoholic beverage. Examples of the non-alcoholic beverage include, but are not limited to, non-alcoholic beers, malt beverages, lactic acid bacteria beverages, cocoa, sports drinks, energy drinks, tea-based beverages, coffee beverages, jelly beverages, carbonated beverages, functional beverages, fruit juice beverages, vegetable-based beverages, milk-based beverages, soy milk beverages, and flavored waters. The beverage according to a preferred embodiment of the present invention is a carbonated beverage, an energy beverage, or a fruit juice beverage.

Beverages according to some embodiments of the present invention are beverages containing: a cinnamic acid, a cinnamic acid derivative, or a combination thereof; an acidulant; and a sweetener, in which the content of the cinnamic acid, the cinnamic acid derivative, or the combination thereof and the acidity in terms of citric acid are adjusted to be within predetermined ranges. As also shown in the Examples of the present specification, thus adjusting the content unexpectedly can alleviate at least one of "discomfort with sweetness remaining on the tongue" or "a decrease in refreshing sensation" in a beverage containing a sweetener. Here, "discomfort with sweetness remaining on the tongue" means that sweetness remains on the tongue and a discomfort different from a sense of refreshment typical of a beverage is perceived. A higher sweetness intensity of the beverage indicates a more pronounced "discomfort with sweetness remaining on the tongue". In addition, "refreshing sensation" means that a refreshing sense of crispness typical of a beverage is perceived as an aroma and taste. In the beverage according to a preferred embodiment of the present invention, both "discomfort with sweetness remaining on the tongue" and "decrease in refreshing sensation" are alleviated.

### Cinnamic Acid and Cinnamic Acid Derivative

Beverages according to some embodiments of the present invention contain a cinnamic acid, a cinnamic acid derivative, or a combination thereof. Cinnamic acid is a type of carboxylic acid contained in cinnamon and the like and has a molecular formula of C₆H₅CH=CHCOOH. Cinnamic acid includes two isomers, trans-cinnamic acid (also referred to as (E)-cinnamic acid) and cis-cinnamic acid (also referred to as allocinnamic acid) as shown below.

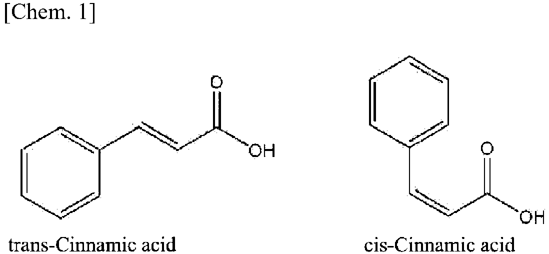

The cinnamic acid derivative means a compound obtained by introducing a functional group into the cinnamic acid or by performing oxidation or reduction. Examples include methyl cinnamate, ethyl cinnamate, n-propyl cinnamate, isopropyl cinnamate, n-butyl cinnamate, isobutyl cinnamate, cinnamaldehyde, phenylethyl cinnamate, isoamyl cinnamate, cinnamic anhydride, and 3,4-dihydroxycinnamic acid. The beverages according to some embodiments of the present invention contain at least one selected from the following eight types of a cinnamic acid or cinnamic acid derivatives.

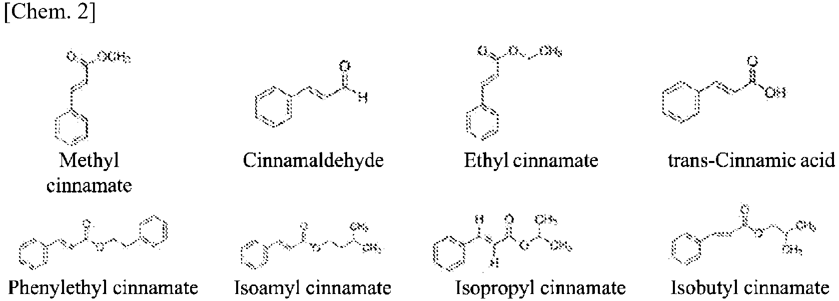

The beverage according to the first embodiment of the present invention contains a cinnamic acid, a cinnamic acid derivative, or a combination thereof, in which a content of at least one of the cinnamic acid, the cinnamic acid derivative, or the combination thereof is from 0.01 to 4 mg/100 g. This means that the content of at least one of the cinnamic acid or the cinnamic acid derivative in the beverage is from 0.01 to 4 mg/100 g. For example, a beverage according to the first embodiment contains from 0.01 to 4 mg/100 g of methyl cinnamate. In this case, the beverage may further contain another cinnamic acid or cinnamic acid derivative, or a combination thereof. The content of at least one of the cinnamic acid, the cinnamic acid derivative, or the combination thereof according to the first embodiment of the present invention may be from 0.01 to 3.5 mg/100 g, from 0.01 to 3 mg/100 g, from 0.01 to 2.5 mg/100 g, from 0.01 to 2 mg/100 g, from 0.01 to 1.5 mg/100 g, from 0.02 to 4 mg/100 g, from 0.02 to 3.5 mg/100 g, from 0.02 to 3 mg/100 g, from 0.02 to 2.5 mg/100 g, from 0.02 to 2 mg/100 g, from 0.02 to 1.5 mg/100 g, from 0.03 to 4 mg/100 g, from 0.03 to 3.5 mg/100 g, from 0.03 to 3 mg/100 g, from 0.03 to 2.5 mg/100 g, from 0.03 to 2 mg/100 g, from 0.03 to 1.5 mg/100 g, from 0.05 to 4 mg/100 g, from 0.05 to 3.5 mg/100 g, from 0.05 to 3 mg/100 g, from 0.05 to 2.5 mg/100 g, from 0.05 to 2 mg/100 g, from 0.05 to 1.5 mg/100 g, from 0.1 to 4 mg/100 g, from 0.1 to 3.5 mg/100 g, from 0.1 to 3 mg/100 g, from 0.1 to 2.5 mg/100 g, from 0.1 to 2 mg/100 g, or from 0.1 to 1.5 mg/100 g. The content is preferably from 0.02 to 3 mg/100 g, more preferably from 0.03 to 2.5 g/100 g, and even more preferably from 0.1 to 2 mg/100 g. The content of the cinnamic acid, the cinnamic acid derivative, or the combination thereof can be determined by gas chromatography (mass spectrometry). Alternatively, if their blending amounts are known, values calculated from those blending amounts may be used.

The beverage according to the second embodiment of the present invention contains a cinnamic acid, a cinnamic acid derivative, or a combination thereof, in which a content of at least one of the cinnamic acid, the cinnamic acid derivative, or the combination thereof is from 2.1 to 4 mg/100 g. This means that the content of at least one of the cinnamic acid or the cinnamic acid derivative in the beverage is from 2.1 to 4 mg/100 g. For example, a beverage according to the second embodiment contains from 2.1 to 4 mg/100 g of methyl cinnamate. In this case, the beverage may further contain another cinnamic acid or cinnamic acid derivative, or a combination thereof. The content of at least one of the cinnamic acid, the cinnamic acid derivative, or the combination thereof according to the second embodiment of the present invention may be from 2.1 to 3.5 mg/100 g, from 2.1 to 3 mg/100 g, or from 2.1 to 2.8 mg/100 g. The content is preferably from 2.1 to 3.5 mg/100 g, more preferably from 2.1 to 3 mg/100 g, and even more preferably from 2.1 to 2.8 mg/100 g. The content of the cinnamic acid, the cinnamic acid derivative, or the combination thereof can be determined by gas chromatography (mass spectrometry). Alternatively, if their blending amounts are known, values calculated from those blending amounts may be used.

The beverage according to the third embodiment of the present invention contains one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a content of the one or more of the cinnamic acid, the cinnamic acid derivative, or the combination thereof is 0.01 mg/100 g or more and less than 5 mg/100 g. This means that the content of the eight types of the cinnamic acid or the cinnamic acid derivatives described here is 0.01 mg/100 g or more and less than 5 mg/100 g. When two or more of the cinnamic acid, the cinnamic acid derivative, or the combination thereof are contained, the content means their total content. For example, a beverage according to the third embodiment contains from 0.01 to 2 mg/100 g of methyl cinnamate and from 0 to 2 mg/100 g of ethyl cinnamate. In this case, the beverage may further contain another cinnamic acid or cinnamic acid derivative other than the eight types described above, or a combination thereof. The content of the eight types of the cinnamic acid, the cinnamic acid derivatives described above, or the combination thereof according to the third embodiment of the present invention may be from 0.01 to 4 mg/100 g, from 0.01 to 3.5 mg/100 g, from 0.01 to 3 mg/100 g, from 0.01 to 2.5 mg/100 g, from 0.01 to 2 mg/100 g, from 0.01 to 1.5 mg/100 g, from 0.02 to 4 mg/100 g, from 0.02 to 3.5 mg/100 g, from 0.02 to 3 mg/100 g, from 0.02 to 2.5 mg/100 g, from 0.02 to 2 mg/100 g, from 0.02 to 1.5 mg/100 g, from 0.03 to 4 mg/100 g, from 0.03 to 3.5 mg/100 g, from 0.03 to 3 mg/100 g, from 0.03 to 2.5 mg/100 g, from 0.03 to 2 mg/100 g, from 0.03 to 1.5 mg/100 g, from 0.05 to 4 mg/100 g, from 0.05 to 3.5 mg/100 g, from 0.05 to 3 mg/100 g, from 0.05 to 2.5 mg/100 g, from 0.05 to 2 mg/100 g, from 0.05 to 1.5 mg/100 g, from 0.1 to 4 mg/100 g, from 0.1 to 3.5 mg/100 g, from 0.1 to 3 mg/100 g, from 0.1 to 2.5 mg/100 g, from 0.1 to 2 mg/100 g, or from 0.1 to 1.5 mg/100 g. The content is preferably from 0.02 to 3 mg/100 g, more preferably from 0.03 to 2.5 g/100 g, and even more preferably from 0.1 to 2 mg/100 g. The content of the cinnamic acid, the cinnamic acid derivative, or the combination thereof can be determined by gas chromatography (mass spectrometry). Alternatively, if their blending amounts are known, values calculated from those blending amounts may be used.

The beverage according to the fourth embodiment of the present invention contains one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a content of the one or more of the cinnamic acid, the cinnamic acid derivative, or the combination thereof is 2.1 mg/100 g or more and less than 5 mg/100 g. This means that the content of the eight types of the cinnamic acid or the cinnamic acid derivatives described here is 2.1 mg/100 g or more and less than 5 mg/100 g. When two or more types of the cinnamic acid, the cinnamic acid derivative, or the combination thereof are contained, the content means their total content. For example, a beverage according to the fourth embodiment contains from 2.1 to 3 mg/100 g of methyl cinnamate and from 0 to 1 mg/100 g of ethyl cinnamate. In this case, the beverage may further contain another cinnamic acid or cinnamic acid derivative other than the eight types described above, or a combination thereof. The content of the eight types of the cinnamic acid, the cinnamic acid derivative, or the combination thereof according to the fourth embodiment of the present invention may be from 2.1 to 4 mg/100 g, from 2.1 to 3.5 mg/100 g, from 2.1 to 3 mg/100 g, or from 2.1 to 2.8 mg/100 g. The content is preferably from 2.1 to 3.5 mg/100 g, more preferably from 2.1 to 3 mg/100 g, and even more preferably from 2.1 to 2.8 mg/100 g. The content of the cinnamic acid, the cinnamic acid derivative, or the combination thereof can be determined by gas chromatography (mass spectrometry). Alternatively, if their blending amounts are known, values calculated from those blending amounts may be used.

In some embodiments of the present invention, the content of methyl cinnamate is from 0.01 to 4 mg/100 g, preferably from 0.02 to 3 mg/100 g, more preferably from 0.03 to 2.5 g/100 g, and even more preferably from 0.1 to 2 mg/100 g.

In some embodiments of the present invention, the content of cinnamaldehyde may be from 0.01 to 4 mg/100 g, from 0.01 to 3.5 mg/100 g, from 0.01 to 3 mg/100 g, from 0.01 to 2.5 mg/100 g, from 0.01 to 2 mg/100 g, from 0.01 to 1.5 mg/100 g, from 0.02 to 4 mg/100 g, from 0.02 to 3.5 mg/100 g, from 0.02 to 3 mg/100 g, from 0.02 to 2.5 mg/100 g, from 0.02 to 2 mg/100 g, from 0.02 to 1.5 mg/100 g, from 0.03 to 4 mg/100 g, from 0.03 to 3.5 mg/100 g, from 0.03 to 3 mg/100 g, from 0.03 to 2.5 mg/100 g, from 0.03 to 2 mg/100 g, from 0.03 to 1.5 mg/100 g, from 0.05 to 4 mg/100 g, from 0.05 to 3.5 mg/100 g, from 0.05 to 3 mg/100 g, from 0.05 to 2.5 mg/100 g, from 0.05 to 2 mg/100 g, from 0.05 to 1.5 mg/100 g, from 0.1 to 4 mg/100 g, from 0.1 to 3.5 mg/100 g, from 0.1 to 3 mg/100 g, from 0.1 to 2.5 mg/100 g, from 0.1 to 2 mg/100 g, or from 0.1 to 1.5 mg/100 g.

In the first embodiment of the present invention, there is provided a beverage preferably containing one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a total content of the one or more of the cinnamic acid, the cinnamic acid derivative, or the combination thereof is 0.01 mg/100 g or more and less than 5 mg/100 g.

In the second embodiment of the present invention, there is provided a beverage preferably containing one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in which a total content of the one or more of the cinnamic acid, the cinnamic acid derivative, or the combination thereof is 2.1 mg/100 g or more and less than 5 mg/100 g.

The beverage according to a preferred embodiment of the present invention contains one or more cinnamic acid derivatives selected from the group consisting of methyl cinnamate, ethyl cinnamate, phenylethyl cinnamate, isoamyl cinnamate, isopropyl cinnamate, and isobutyl cinnamate.

According to some embodiments of the present invention, the beverage may contain one or more types of other cinnamic acid derivatives in addition to the eight types of cinnamic acid derivatives described above. Examples of such other cinnamic acid derivatives include, but are not limited to, n-propyl cinnamate, n-butyl cinnamate, cinnamic anhydride, and 3,4-dihydroxycinnamic acid.

Beverages according to some embodiments of the present invention consist essentially of one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate. Here, "consist essentially of" means that the cinnamic acid, the cinnamic acid derivative, or the combination thereof contained in the beverage may contain a small amount of a cinnamic acid, a cinnamic acid derivative, or a combination thereof other than the one or more of the cinnamic acid, the cinnamic acid derivatives, or the combination thereof. For example, the beverage consisting essentially of the one or more of the cinnamic acid, the cinnamic acid derivative, or the combination thereof means that a total content of the one or more of the cinnamic acid, the cinnamic acid derivative, or the combination thereof is preferably from 85 to 100 wt.%, more preferably from 90 to 100 wt.%, and even more preferably from 95 to 100 wt.% based on a total weight of cinnamic acids and cinnamic acid derivatives. The total content of the one or more of the cinnamic acid, the cinnamic acid derivative, or the combination thereof being 100 wt.% based on a total weight of cinnamic acids, a cinnamic acid derivative, or a combination thereof means that the cinnamic acid, the cinnamic acid derivative, or the combination thereof are composed of the one or more of the cinnamic acid, the cinnamic acid derivative, or the combination thereof, and the content of any other cinnamic acid, cinnamic acid derivative, or a combination thereof is an impurity amount (less than 1 wt.%).

### Acidulant

The beverage according to one embodiment of the present invention contains an acidulant. The acidulant is not particularly limited as long as it can impart sourness to the beverage, and examples include ascorbic acid, phosphoric acid, citric acid, gluconic acid, tartaric acid, lactic acid, malic acid, phytic acid, acetic acid, succinic acid, glucono-delta-lactone, and a salt thereof. Examples of the salt include sodium citrate (monosodium citrate, disodium citrate, or trisodium citrate) and sodium ascorbate. Among these sour substances, the acidulant is preferably ascorbic acid, phosphoric acid, citric acid, gluconic acid, tartaric acid, lactic acid, malic acid, phytic acid, acetic acid, succinic acid, or a salt of these, and more preferably one or more acidulants selected from phosphoric acid, citric acid, lactic acid, tartaric acid, and acetic acid, or a salt thereof. One of these acidulants may be used alone, or two or more may be used in combination.

The content of the acidulant in the beverage can be specified by acidity. The acidity (in terms of citric acid) of the beverage can be measured by a neutralization titration method using an automatic potentiometric titrator (e.g., AT-500N available from Kyoto Electronics Manufacturing Co., Ltd.). Specifically, distilled water is added to 10 g of a beverage sample to make a total amount 50 mL, and then a sodium hydroxide solution (0.1 N, reagent for volumetric analysis) is added dropwise from a burette with stirring until the pH reaches 8.0. Then, the acidity in terms of citric acid is calculated based on the following equation: "Acidity (g/100 g) of whole beverage" = titration volume (mL) × F × A × (100/sample amount (g))
F: about 1.00 (factor of the 0.1 N sodium hydroxide solution)
A: 0.0064 (the number of grams of citric acid corresponding to 1 mL of the sodium hydroxide solution).

The acidulant blended in the beverage can be analyzed by a known method, such as a HPLC method. When the added amount of the acidulant is known and no other acidulant is added, the acidity can be calculated from the added amount of the acidulant.

The beverage according to the first and third embodiments of the present invention may have an acidity of 0.65 to 2.5 g/100 g in terms of citric acid. The acidity may range from 0.65 to 2.0 g/100 g, from 0.65 to 1.8 g/100 g, from 0.65 to 1.5 g/100 g, from 0.65 to 1.3 g/100 g, from 0.65 to 1.1 g/100 g, from 0.65 to 1 g/100 g, from 0.65 to 0.95 g/100 g, from 0.65 to 0.90 g/100 g, from 0.70 to 2.0 g/100 g, from 0.70 to 1.8 g/100 g, from 0.70 to 1.5 g/100 g, from 0.70 to 1.3 g/100 g, from 0.70 to 1.1 g/100 g, from 0.70 to 1 g/100 g, from 0.70 to 0.95 g/100 g, or from 0.70 to 0.90 g/100 g. The acidity is preferably from 0.65 to 1 g/100 g, more preferably from 0.65 to 0.95 g/100 g, and even more preferably from 0.70 to 0.90 g/100 g.

The beverage according to the second and fourth embodiments of the present invention may have an acidity of 0.20 to 0.65 g/100 g in terms of citric acid. The acidity may range from 0.25 to 0.65 g/100 g, from 0.30 to 0.65 g/100 g, from 0.35 to 0.65 g/100 g, from 0.40 to 0.65 g/100 g, from 0.45 to 0.65 g/100 g, or from 0.50 to 0.65 g/100 g. The acidity is preferably from 0.25 to 0.65 g/100 g, more preferably from 0.35 to 0.65 g/100 g, and even more preferably from 0.40 to 0.65 g/100 g.

In some preferred embodiments of the present invention, the content of at least one of the cinnamic acid, the cinnamic acid derivative, or the combination thereof is from 0.15 to 2 mg/100 g, and the acidity is from 0.65 to 1 g/100 g in terms of citric acid. In some other preferred embodiments of the present invention, the content of the one or more of the cinnamic acid, the cinnamic acid derivative, or the combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate is from 0.15 to 2 mg/100 g, and the acidity is from 0.65 to 1 g/100 g in terms of citric acid.

### Sweetener

The beverages according to some embodiments of the present invention contain one or more sweeteners. Examples of the sweetener that can be used include a low-intensity sweetener, a high-intensity sweetener, or a combination thereof. In the present specification, the low-intensity sweetener means a sweetener with a sweetness equivalent to or lower than that of sucrose. For example, the low-intensity sweetener exhibits a sweetness of 0.1 times or more and less than 5 times, less than 3 times, less than 2 times, less than 1.5 times, less than 1.0 times, less than 0.8 times, less than 0.7 times, less than 0.6 times, less than 0.5 times, or less than 0.4 times that of sucrose in the same amount as sucrose. Examples of the low-intensity sweetener that can be used in the present invention include sweeteners selected from glucose, sucrose, xylitol, erythritol, fructose, maltose, oligosaccharides, high fructose corn syrup (HFCS), lactose, psicose, allose, tagatose, xylose, ribose, and a combination thereof. The beverage according to a preferred embodiment of the present invention contains glucose, fructose, sucrose, high fructose corn syrup, or a rare sugar (such as psicose (allulose), xylitol, and erythritol).

In the present specification, "high-intensity sweetener" means a compound with a stronger sweetness than that of sucrose and may be a naturally occurring compound, a synthetic compound, or a combination of naturally occurring and synthetic compounds. The high-intensity sweetener exhibits a sweetness of 5 times or more, 10 times or more, 50 times or more, 100 times or more, 500 times or more, 1000 times or more, 5000 times or more, 10000 times or more, 50000 times or more, or 100000 times or more that of sucrose in the same amount as sucrose. The steviol glycoside described above is also one of the high-intensity sweeteners.

Specific examples of the high-intensity sweetener include peptide-based sweeteners, such as aspartame, neotame, and advantame; sucrose derivatives, such as sucralose; synthetic sweeteners (including sweeteners, such as neohesperidin dihydrochalcone, for which a naturally occurring product is also available but a synthesized product is mainly distributed), such as acesulfame potassium (acesulfame K), saccharin, sodium saccharin, sodium cyclamate, dulcin, disodium glycyrrhizinate, trisodium glycyrrhizinate, and neohesperidin dihydrochalcone; sweeteners extracted from a plant, such as thaumatin, monellin, curculin, mabinlin, brazzein, pentadin, hernandulcin, 4β-hydroxyhernandulcin, miraculin, glycyrrhizin, rubusoside, and phyllodulcin; steviol glycosides, such as rebaudioside A, rebaudioside D, and rebaudioside M; glycosides of a cucurbitane derivative, such as mogroside IV and mogroside V; or plant extracts containing a high-intensity sweetener component, such as a stevia extract or a monk fruit extract.

The beverage according to another embodiment of the present invention may preferably contain a peptide-based sweetener, a sucrose derivative, a synthetic sweetener, or the like. For example, the beverage according to another embodiment of the present invention may contain one or more high-intensity sweeteners selected from acesulfame K and sucralose. That is, the beverage according to another embodiment of the present invention may contain only acesulfame K, only sucralose, or a combination of acesulfame K and sucralose. The beverage of another preferred embodiment contains one or more low-intensity sweeteners selected from the group consisting of sucrose, glucose, fructose, high fructose corn syrup, psicose, and erythritol.

The content of the sweetener is not particularly limited, but the sweetness intensity of the beverage is preferably 5 or more (e.g., from 10 to 25) in terms of sucrose equivalent value (SEV). A sucrose equivalent value of 1 is the sweetness intensity exhibited by sucrose per unit concentration Brix 1. Here, Brix 1 means that 1 g of sucrose is dissolved in 100 g of an aqueous sucrose solution (sucrose concentration 1 w/w%). In the present specification, the sucrose equivalent value of the beverage can be obtained by summing the values obtained by multiplying the concentration of each sweetener contained in the beverage (w/v%, which, for a beverage, can be regarded as equivalent to w/w%) by the sweetness of each sweetener. For example, in the present specification, when the sweetness of sucrose is defined as 1, rebaudioside D has a sweetness of about 225 times, rebaudioside M about 230 times, rebaudioside A from 200 to 300 times (central value 250), monk fruit extract from about 110 to 150 times (central value 130), mogroside V from about 240 to 300 times (central value 270), thaumatin about 2000 times, acesulfame potassium about 200 times, sucralose about 600 times, and aspartame about 200 times. In addition, in the present specification, for example, when the sweetness of sucrose is defined as 1, glucose has a sweetness of about 0.6 to about 0.7, xylitol about 1, erythritol from about 0.75 to about 0.85, fructose from about 1.3 to about 1.7, maltose about 0.4, fructooligosaccharide about 0.6, maltooligosaccharide about 0.3, isomaltooligosaccharide from about 0.4 to about 0.5, galactooligosaccharide about 0.7, high fructose corn syrup about 0.75, lactose from about 0.2 to 0.3, psicose about 0.7, allose about 0.8, tagatose about 0.9, xylose from about 0.6 to about 0.7, and ribose about 0.6. Among the relative ratios of the sweetness of various sweeteners to that of sucrose defined as 1, those not described in the present specification can be determined from a known sugar sweetness conversion table or the like. Here, the sweetness of aspartame is about 200 times that of sucrose; thus, a beverage containing 0.005 wt.% (50 ppm) of aspartame has a sweetness of 1 in terms of sucrose equivalent value when it contains no other sweeteners. When the beverage contains other sweeteners (a high-intensity sweetener and/or a low-intensity sweetener), the sweetness intensity of the beverage is expressed as the sum of the sucrose equivalent values of the sweetness intensities provided by each of those sweeteners.

The beverages according to some embodiments of the present invention may contain a high-intensity sweetener in an amount of 5 to 100 mg/100 g, from 5 to 90 mg/100 g, from 5 to 80 mg/100 g, from 5 to 70 mg/100 g, from 5 to 60 mg/100 g, from 5 to 50 mg/100 g, from 5 to 40 mg/100 g, from 5 to 30 mg/100 g, from 5 to 20 mg/100 g, from 10 to 100 mg/100 g, from 10 to 90 mg/100 g, from 10 to 80 mg/100 g, from 10 to 70 mg/100 g, from 10 to 60 mg/100 g, from 10 to 50 mg/100 g, from 10 to 40 mg/100 g, from 10 to 30 mg/100 g, from 10 to 20 mg/100 g, from 20 to 100 mg/100 g, from 20 to 90 mg/100 g, from 20 to 80 mg/100 g, from 20 to 70 mg/100 g, from 20 to 60 mg/100 g, from 20 to 50 mg/100 g, from 20 to 40 mg/100 g, from 20 to 30 mg/100 g, from 30 to 100 mg/100 g, from 30 to 90 mg/100 g, from 30 to 80 mg/100 g, from 30 to 70 mg/100 g, from 30 to 60 mg/100 g, from 30 to 50 mg/100 g, or from 30 to 40 mg/100 g. The content of the high-intensity sweetener can be measured by high-performance liquid chromatography (HPLC). Alternatively, if their blending amounts are known, values calculated from those blending amounts may be used.

The beverages according to some embodiments of the present invention may contain a low-intensity sweetener in an amount of 1 to 25 g/100 g, from 1 to 20 g/100 g, from 1 to 15 g/100 g, from 1 to 10 g/100 g, from 1 to 5 g/100 g, from 5 to 25 g/100 g, from 5 to 20 g/100 g, from 5 to 15 g/100 g, from 5 to 10 g/100 g, from 10 to 25 g/100 g, from 10 to 20 g/100 g, or from 10 to 15 g/100 g. The content of the high-intensity sweetener can be measured by high-performance liquid chromatography (HPLC). Alternatively, if their blending amounts are known, values calculated from those blending amounts may be used.

The sweetness intensity of the beverages according to some embodiments of the present invention is preferably 25 or less and more preferably 20 or less in terms of sucrose equivalent value. The sweetness intensity of the beverages according to some more preferred embodiments of the present invention in terms of sucrose equivalent value may be from 3 to 25, from 6 to 25, from 8 to 25, from 10 to 25, from 12 to 25, from 14 to 25, from 16 to 25, from 6 to 22, from 8 to 22, from 10 to 22, from 12 to 22, from 14 to 22, from 16 to 22, from 3 to 20, from 6 to 20, from 8 to 20, from 10 to 20, from 12 to 20, from 14 to 20, from 16 to 20, from 6 to 18, from 8 to 18, from 10 to 18, from 12 to 18, from 14 to 18, from 6 to 16, from 8 to 16, from 10 to 16, or from 12 to 16.

### Additional Component

The beverages according to some embodiments of the present invention contain caffeine. Caffeine is generally known to be contained in some foods and beverages, such as coffee; however, caffeine used in the present invention may be purified from a food or beverage rich in caffeine, or may be chemically synthesized or biosynthesized. In addition, caffeine preparations are generally commercially available; thus, such a commercially available product may be used. Alternatively, a caffeine-containing raw material, such as cola extract and/or coffee bean extract, may be used.

In a preferred embodiment of the present invention, the content of caffeine is 5 mg/100 g or more. In another preferred embodiment, the content of caffeine may be 10 mg/100 g or more, from 10 to 300 mg/100 g, from 20 to 250 mg/100 g, from 25 to 100 mg/100 g, or from 30 to 50 mg/100 g. The content of caffeine in the beverage can be measured by high-performance liquid chromatography (HPLC). Alternatively, if its blending amount is known, a value calculated from that amount may be used.

The beverages according to some embodiments of the present invention contain a vitamin. Various vitamins can be added; for example, the beverage may contain one or more selected from vitamin A, vitamin B1, vitamin B2, vitamin B6, vitamin C, and vitamin E. The beverage according to a preferred embodiment contains vitamin B2. The content of vitamin B2 is preferably 0.4 mg/100 g or more and may be, for example, from 0.4 to 5 mg/100 g, from 0.4 to 3 mg/100 g, from 0.4 to 2 mg/100 g, from 0.4 to 1 mg/100 g, from 0.4 to 0.8 mg/100 g, from 0.4 to 0.6 mg/100 g, from 0.5 to 5 mg/100 g, from 0.5 to 3 mg/100 g, from 0.5 to 2 mg/100 g, from 0.5 to 1 mg/100 g, from 0.5 to 0.8 mg/100 g, or from 0.5 to 0.6 mg/100 g. The beverage according to another preferred embodiment contains vitamin B6. The content of vitamin B6 is preferably 0.1 mg/100 g or more and may be, for example, from 0.1 to 5 mg/100 g, from 0.1 to 3 mg/100 g, from 0.1 to 2 mg/100 g, from 0.1 to 1 mg/100 g, from 0.1 to 0.8 mg/100 g, from 0.4 to 0.6 mg/100 g, from 0.5 to 5 mg/100 g, from 0.5 to 3 mg/100 g, from 0.5 to 2 mg/100 g, from 0.5 to 1 mg/100 g, from 0.5 to 0.8 mg/100 g, or from 0.5 to 0.6 mg/100 g.

The beverages according to some embodiments of the present invention contain water. The water is not particularly limited, and any water can be used as long as it does not adversely affect the flavor. Examples of the water include tap water, ion-exchanged water, softened water, distilled water, carbonated water, reverse osmosis water (RO water), treated water, purified water, and demineralized water.

### Additional Optional Component

The beverages according to some embodiments of the present invention may contain, in addition to the components described above, a component that can be added to ordinary beverages as long as the effects of the present invention are not impaired. Examples of such a component include flavoring agents, coloring materials, antioxidants, emulsifiers, seasonings, extracts, pH adjusters, and quality stabilizers.

### Properties

The pH of the beverages according to some embodiments of the present invention is preferably from 2.5 to 5 and may be from 3.0 to 4.8, from 3.2 to 4.8, from 3.4 to 4.8, from 3.6 to 4.8, from 3.8 to 4.8, from 3.2 to 4.6, from 3.4 to 4.6, from 3.6 to 4.6, from 3.8 to 4.6, from 3.2 to 4.4, from 3.4 to 4.4, from 3.6 to 4.4, from 3.8 to 4.4, or from 3.8 to 4.2. Adjusting the pH to this range can maintain good taste quality while reducing propagation of microorganisms.

The energy of the beverages according to some embodiments of the present invention can be, according to an embodiment, 100 kcal/100 mL or less, from 0 to 100 kcal/100 mL, from 0 to 90 kcal/100 mL, from 0 to 80 kcal/100 mL, from 0 to 70 kcal/100 mL, from 0 to 60 kcal/100 mL, from 0 to 50 kcal/100 mL, from 0 to 40 kcal/100 mL, from 0 to 30 kcal/100 mL, from 0 to 20 kcal/100 mL, from 0 to 10 kcal/100 mL, from 0 to 5 kcal/100 mL, from 5 to 100 kcal/100 mL, from 5 to 90 kcal/100 mL, from 5 to 80 kcal/100 mL, from 5 to 70 kcal/100 mL, from 5 to 60 kcal/100 mL, from 5 to 50 kcal/100 mL, from 5 to 40 kcal/100 mL, from 5 to 30 kcal/100 mL, from 5 to 20 kcal/100 mL, from 5 to 10 kcal/100 mL, from 10 to 100 kcal/100 mL, from 10 to 90 kcal/100 mL, from 10 to 80 kcal/100 mL, from 10 to 70 kcal/100 mL, from 10 to 60 kcal/100 mL, from 10 to 50 kcal/100 mL, from 10 to 40 kcal/100 mL, from 10 to 30 kcal/100 mL, from 10 to 20 kcal/100 mL, from 20 to 100 kcal/100 mL, from 20 to 90 kcal/100 mL, from 20 to 80 kcal/100 mL, from 20 to 70 kcal/100 mL, from 20 to 60 kcal/100 mL, from 20 to 50 kcal/100 mL, from 20 to 40 kcal/100 mL, or from 20 to 30 kcal/100 mL. The energy of a sweet substance is known, or can be determined by measuring its content by HPLC or the like and multiplying the measured value by an energy conversion factor, or by measuring the physical combustion heat with a calorimeter (e.g., a bomb calorimeter) and correcting this measurement with a digestibility coefficient, an amount of heat excreted, or the like.

### Container and Sterilization

Forms of the beverages according to some embodiments of the present invention are not limited and may be, for example, forms of packaged beverages in which the beverage is enclosed and packaged in a container, such as a can, a bottle, a PET bottle, a pouch, a paper pack, or a plastic container. In the case of performing heat sterilization after packaging the beverage, the type of heat sterilization is not particularly limited, and the beverage can be sterilized by an ordinary technique, for example, overturning sterilization, UHT sterilization, or retort sterilization. The temperature of the heat sterilization process is not particularly limited but is, for example, from 65 to 130°C and preferably from 80 to 120°C for 1 to 40 minutes. However, as long as a sterilization value equivalent to that in the conditions described above is obtained, a sterilization at an appropriate temperature for several seconds, for example, from 5 to 30 seconds, is also acceptable.

### 2. Method for Producing Beverage

The present invention provides, as one aspect, a method for producing the beverage below (hereinafter also referred to as "the production method of the beverage of the present invention"). The production method of one embodiment of the present invention is not particularly limited as long as the beverage can be obtained by blending the components described above.

Examples of the production method according to one embodiment of the present invention include methods such as the following. The beverage can be produced by first weighing predetermined amounts of one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate; an acidulant; and a sweetener; and adding them to water or a beverage base. These components may be added simultaneously or separately, or may be added after preparing a premix by mixing the components before addition.

In addition, in the production method according to one embodiment of the present invention, an additional optional component and/or the like can be appropriately added. The optional component may be added simultaneously with or separately from the cinnamic acid, the cinnamic acid derivative, or the combination thereof, acidulant, and sweetener described above.

In the production method of one embodiment of the present invention, the description in the section "1. Beverage" applies to "beverage", "additional optional component", "properties", and "container and sterilization", and the numerical values described in the section of the beverage apply as they are to those numerical values.

### 3. Method for Improving Taste Quality of Beverage

The present invention provides, as one aspect, a method for improving the taste quality of the beverage containing a sweetener using a cinnamic acid, a cinnamic acid derivative, or a combination thereof, and an acidulant (hereinafter also referred to as "the taste quality improving method of the present invention").

As a first embodiment of the taste quality improving method of the present invention, there is provided a method for alleviating discomfort with sweetness remaining on the tongue, the method including:
adding, to a beverage containing a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 mg/100 g or more and less than 5 mg/100 g based on a total weight of the beverage; and
adding an acidulant to the beverage such that the beverage has an acidity of 0.65 to 2.5 g/100 g in terms of citric acid.

As a second embodiment of the taste quality improving method of the present invention, there is provided a method for improving refreshing sensation, the method including:
adding, to a beverage containing a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 mg/100 g or more and less than 5 mg/100 g based on a total weight of the beverage; and
adding an acidulant to the beverage such that the beverage has an acidity of 0.65 to 2.5 g/100 g in terms of citric acid.

The taste quality improving methods according to some embodiments of the present invention can alleviate discomfort with sweetness remaining on the tongue and/or a decrease in refreshing sensation of a beverage containing a sweetener. Without wishing to be bound by theory, adding a predetermined amount of a cinnamic acid, a cinnamic acid derivative, or a combination thereof to a beverage having a sweetener with a predetermined acidity is believed to achieve an effect of alleviating discomfort with sweetness remaining on the tongue and/or a decrease in refreshing sensation. The examples described later show that setting the contents of a cinnamic acid, a cinnamic acid derivative, or a combination thereof, and the acidity within the predetermined ranges achieved the effect; thus, such an effect was very unexpected.

In the method according to the first embodiment of the present invention, the amount of the one or more of the cinnamic acid, the cinnamic acid derivative, or the combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, added to the beverage may be, based on a total weight of the beverage, from 0.01 to 4 mg/100 g, from 0.01 to 3.5 mg/100 g, from 0.01 to 3 mg/100 g, from 0.01 to 2.5 mg/100 g, from 0.01 to 2 mg/100 g, from 0.01 to 1.5 mg/100 g, from 0.02 to 4 mg/100 g, from 0.02 to 3.5 mg/100 g, from 0.02 to 3 mg/100 g, from 0.02 to 2.5 mg/100 g, from 0.02 to 2 mg/100 g, from 0.02 to 1.5 mg/100 g, from 0.03 to 4 mg/100 g, from 0.03 to 3.5 mg/100 g, from 0.03 to 3 mg/100 g, from 0.03 to 2.5 mg/100 g, from 0.03 to 2 mg/100 g, from 0.03 to 1.5 mg/100 g, from 0.05 to 4 mg/100 g, from 0.05 to 3.5 mg/100 g, from 0.05 to 3 mg/100 g, from 0.05 to 2.5 mg/100 g, from 0.05 to 2 mg/100 g, from 0.05 to 1.5 mg/100 g, from 0.1 to 4 mg/100 g, from 0.1 to 3.5 mg/100 g, from 0.1 to 3 mg/100 g, from 0.1 to 2.5 mg/100 g, from 0.1 to 2 mg/100 g, or from 0.1 to 1.5 mg/100 g. The amount is preferably from 0.02 to 3 mg/100 g, more preferably from 0.03 to 2.5 g/100 g, and even more preferably from 0.1 to 2 mg/100 g.

In the method according to the second embodiment of the present invention, the amount of the one or more of the cinnamic acid, the cinnamic acid derivative, or the combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, added to the beverage may be, based on a total weight of the beverage, from 2.1 to 4 mg/100g, from 2.1 to 3.5 mg/100g, from 2.1 to 3 mg/100g, or from 2.1 to 2.8 mg/100g. The amount is preferably from 2.1 to 3.5 mg/100 g, more preferably from 2.1 to 3 mg/100 g, and even more preferably from 2.1 to 2.8 mg/100 g.

In the method according to the first embodiment of the present invention, the amount of the acidulant added to the beverage may be an amount such that the beverage has an acidity concentration of 0.65 to 2.5 g/100 g in terms of citric acid. The acidity may range from 0.65 to 2.0 g/100 g, from 0.65 to 1.8 g/100 g, from 0.65 to 1.5 g/100 g, from 0.65 to 1.3 g/100 g, from 0.65 to 1.1 g/100 g, from 0.65 to 1 g/100 g, from 0.65 to 0.95 g/100 g, from 0.65 to 0.90 g/100 g, from 0.70 to 2.0 g/100 g, from 0.70 to 1.8 g/100 g, from 0.70 to 1.5 g/100 g, from 0.70 to 1.3 g/100 g, from 0.70 to 1.1 g/100 g, from 0.70 to 1 g/100 g, from 0.70 to 0.95 g/100 g, or from 0.70 to 0.90 g/100 g. The acidity is preferably from 0.65 to 1 g/100 g, more preferably from 0.65 to 0.95 g/100 g, and even more preferably from 0.70 to 0.90 g/100 g.

In the method according to the second embodiment of the present invention, the amount of the acidulant added to the beverage may be an amount such that the beverage has an acidity concentration of 0.20 to 0.65 g/100 g in terms of citric acid. The acidity may range from 0.25 to 0.65 g/100 g, from 0.30 to 0.65 g/100 g, from 0.35 to 0.65 g/100 g, from 0.40 to 0.65 g/100 g, from 0.45 to 0.65 g/100 g, or from 0.50 to 0.65 g/100 g. The acidity is preferably from 0.25 to 0.65 g/100 g, more preferably from 0.35 to 0.65 g/100 g, and even more preferably from 0.40 to 0.65 g/100 g.

In some embodiments of the present invention, the one or more of the cinnamic acid, the cinnamic acid derivative, or the combination thereof may be added as raw materials during the beverage production process. Alternatively, the one or more of the cinnamic acid, the cinnamic acid derivative, or the combination thereof may be added to the beverage separately after the beverage has been produced.

In the taste quality improving method of one embodiment of the present invention, the description in the section "1. Beverage" applies to "beverage", "additional optional component", "properties", and "container and sterilization", and the numerical values described in the section of the beverage apply as they are to those numerical values.

### Exemplary Embodiments of Present Invention

Exemplary embodiments of the present invention will be described below, but the present invention is not limited to the following embodiments.

Exemplary embodiment 1 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
one or more acidulants selected from ascorbic acid, phosphoric acid, citric acid, gluconic acid, tartaric acid, lactic acid, malic acid, phytic acid, acetic acid, succinic acid, and acetic acid, or a salt thereof, preferably one or more acidulants selected from citric acid and citrate salts; and
a sweetener, in which
a content of the one or more of the cinnamic acid, the cinnamic acid derivative, or the combination thereof is 0.01 mg/100 g or more and less than 5 mg/100 g, and
an acidity is from 0.65 to 2.5 g/100 g in terms of citric acid.

Exemplary embodiment 2 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
one or more acidulants selected from ascorbic acid, phosphoric acid, citric acid, gluconic acid, tartaric acid, lactic acid, malic acid, phytic acid, acetic acid, succinic acid, and acetic acid, or a salt thereof, preferably one or more acidulants selected from citric acid and citrate salts; and
a sweetener, in which
a content of the one or more of the cinnamic acid, the cinnamic acid derivative, or the combination thereof is 2.1 mg/100 g or more and less than 5 mg/100 g, and
an acidity is from 0.20 to 0.65 g/100 g in terms of citric acid.

Exemplary embodiment 3 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, in which
a content of the one or more of the cinnamic acid, the cinnamic acid derivative, or the combination thereof is 0.01 mg/100 g or more and less than 5 mg/100 g,
an acidity is from 0.65 to 2.5 g/100 g in terms of citric acid, and
a sweetness intensity is from 3 to 25, preferably from 8 to 22, more preferably from 10 to 20 in terms of sucrose equivalent value.

Exemplary embodiment 4 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, in which
a content of the one or more of the cinnamic acid, the cinnamic acid derivative, or the combination thereof is 2.1 mg/100 g or more and less than 5 mg/100 g,
an acidity is from 0.20 to 0.65 g/100 g in terms of citric acid, and
a sweetness intensity is from 3 to 25, preferably from 8 to 22, more preferably from 10 to 20 in terms of sucrose equivalent value.

Exemplary embodiment 5 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, in which
a content of the one or more of the cinnamic acid, the cinnamic acid derivative, or the combination thereof is from 0.15 to 2 mg/100 g, and
an acidity is from 0.65 to 1 g/100 g in terms of citric acid.

Exemplary embodiment 6 of the present invention provides an energy beverage containing:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, in which
a content of the one or more of the cinnamic acid, the cinnamic acid derivative, or the combination thereof is from 0.15 to 2 mg/100 g,
an acidity is from 0.65 to 1 g/100 g in terms of citric acid, and
a sweetness intensity is from 3 to 25, preferably from 8 to 22, more preferably from 10 to 20 in terms of sucrose equivalent value.

In the present specification, the wording "about" means that the subject is present in a range of ±25%, ±10%, ±5%, ±3%, ±2%, or ±1% of the numerical value following "about". For example, "about 10" means a range of 7.5 to 12.5. In addition, in the present specification, wt.% can be regarded as equivalent to mass%.

### Examples

Hereinafter, the present invention will be specifically described by illustrating examples, but the present invention is not limited to the following examples.

### Example A: Evaluations Using Naturally Occurring Low-Intensity Sweetener Preparation of Samples

Sample liquids were prepared by mixing a cinnamic acid derivative, a sweetener, caffeine, citric acid, trisodium citrate, and water in the blending amounts shown in Table 1, and then filling the mixture into a can. The following raw materials were used: methyl cinnamate (available from Sigma-Aldrich, methyl cinnamate, natural, ≥98% food grade), granulated sugar, caffeine, citric acid (anhydrous), trisodium citrate, and water (ion-exchanged water). The raw materials for each sample were compounded and then sterilized at 85°C for 10 minutes, and carbon dioxide gas was injected to give a gas pressure of about 2.0 kgf/cm² at a liquid temperature of 20°C.

### Sensory Evaluation Item 1: Evaluation of Discomfort with Sweetness Remaining on Tongue Evaluation Method

For the samples prepared as described above, four trained expert panelists independently scored the "discomfort with sweetness remaining on the tongue" on a four-point scale (from 0 to 3) in increments of 1 according to the evaluation criteria described below, and the average value was calculated. The evaluation criteria were coordinated and aligned in advance between the panelists. Here, "discomfort with sweetness remaining on the tongue" means a sensation in which sweetness remains on the tongue and a discomfort, different from the refreshment typical of a beverage, is perceived. The average score among the panelists is preferably 1.5 or less and more preferably 0.5 or less. The discomfort with sweetness remaining on the tongue was evaluated by swallowing the sample.

### Evaluation Criteria

Score 3: Discomfort is perceived
Score 2: Discomfort is slightly perceived
Score 1: Almost no discomfort is perceived
Score 0: No discomfort is perceived

### Sensory Evaluation Item 2: Evaluation of Refreshing Sensation

### Evaluation Method

For the samples prepared as described above, four trained expert panelists independently scored the "refreshing sensation" on a four-point scale (from 0 to 3) in increments of 1 according to the evaluation criteria described below, and the average value was calculated. The evaluation criteria were coordinated and aligned in advance between the panelists. Here, "refreshing sensation" means that a refreshing sense of crispness typical of a beverage is perceived as an aroma and taste. The average score among the panelists is preferably 1.5 or more and more preferably 2.5 or more. The refreshing sensation was evaluated by swallowing the sample.

### Evaluation Criteria

Score 3: Refreshing sensation is perceived
Score 2: Refreshing sensation is slightly perceived
Score 1: Almost no refreshing sensation is perceived
Score 0: No refreshing sensation is perceived

The results of the sensory evaluations are shown in Table 1. The main component of granulated sugar is sucrose; thus, the sweetness intensity of the beverage containing 11 g/100 g of granulated sugar was regarded as 11 (SEV = 11). In addition, the content of each component was calculated from the added amount. The acidity was calculated from a measured value in a preliminary experiment.

**[Table 1]**

| Table 1: Compositions and sensory evaluation results of beverages containing granulated sugar and caffeine | | | | | | | | | | | | |
|---|---|---|---|---|---|---|---|---|---|---|---|---|
| Sample No. | Unit | 1 | 2 | 3 | 4 | 5 | 6 | 7 | 8 | 9 | 10 | 11 |
| Acidity | g/100 g | 0.70 | 0.70 | 0.70 | 0.70 | 0.70 | 0.70 | 0.70 | 0.70 | 0.50 | 0.50 | 0.50 |
| Methyl cinnamate | mg/100 g | 0.00 | 0.015 | 0.15 | 0.30 | 1.00 | 2.00 | 2.50 | 10.0 | 0.00 | 0.30 | 2.50 |
| Granulated sugar | g/100 g | 11 | 11 | 11 | 11 | 11 | 11 | 11 | 11 | 11 | 11 | 11 |
| Caffeine | mg/100 g | 37.5 | 37.5 | 37.5 | 37.5 | 37.5 | 37.5 | 37.5 | 37.5 | 37.5 | 37.5 | 37.5 |
| Citric acid (anhydrous) | g/100 g | 7.1 | 7.1 | 7.1 | 7.1 | 7.1 | 7.1 | 7.1 | 7.1 | 5.2 | 5.2 | 5.2 |
| Trisodium citrate | g/100 g | 2.24 | 2.24 | 2.24 | 2.24 | 2.24 | 2.24 | 2.24 | 2.24 | 1.64 | 1.64 | 1.64 |
| Sensory evaluation item 1 Discomfort with sweetness remaining on tongue | - | 3.0 | 1.5 | 0.5 | 0.5 | 0.0 | 0.5 | 1.5 | 3.0 | 3.0 | 2.5 | 1.5 |
| Sensory evaluation item 2 Refreshing sensation | - | 0.0 | 2.0 | 3.0 | 3.0 | 3.0 | 3.0 | 2.0 | 0.0 | 0.0 | 0.5 | 1.5 |

| | | | | | | | | | | | | |
|---|---|---|---|---|---|---|---|---|---|---|---|---|
| 1) In the table, "0.00" means that the corresponding raw material was not added. | | | | | | | | | | | | |

### Example B: Evaluations Using Artificial High-Intensity Sweeteners

### Preparation of Samples

In the same manner as in Example A, sample liquids were prepared by mixing a cinnamic acid derivative, sweeteners, caffeine, citric acid, trisodium citrate, and water in the blending amounts shown in Table 2, and then filling the mixture into a can. The following raw materials were used: methyl cinnamate (available from Sigma-Aldrich, methyl cinnamate, natural, ≥98%, FCC, FG), sucralose, acesulfame potassium, caffeine, citric acid (anhydrous), trisodium citrate, and water (ion-exchanged water). The raw materials for each sample were compounded and then sterilized at 85°C for 10 minutes, and carbon dioxide gas was injected to give a gas pressure of about 2.0 kgf/cm² at a liquid temperature of 20°C.

### Sensory Evaluations

### Evaluation Method

In the same manner as in Example A, for the samples prepared as described above, four trained expert panelists evaluated the sensory evaluation items 1 and 2. The results are shown in Table 2. The sweetness intensity of the beverage was adjusted to 12 (SEV = 12) in terms of the amounts of sucralose and acesulfame K. In addition, the content of each component was calculated from the added amount. The acidity was calculated from a measured value in a preliminary experiment.

**[Table 2]**

| Table 2: Compositions and sensory evaluation results of beverages containing artificial high-intensity sweetener and caffeine | | | | | | | | | | | | |
|---|---|---|---|---|---|---|---|---|---|---|---|---|
| Sample No. | Unit | 11 | 12 | 13 | 14 | 15 | 16 | 17 | 18 | 19 | 20 | 21 |
| Acidity | g/100 g | 2.88 | 1.30 | 1.30 | 1.30 | 1.30 | 0.80 | 0.80 | 0.80 | 0.62 | 0.62 | 0.62 |
| Methyl cinnamate | mg/100 g | 0.30 | 0.00 | 0.015 | 0.30 | 2.50 | 0.00 | 0.30 | 2.50 | 0.00 | 0.30 | 2.50 |
| Sucralose | mg/100 g | 10 | 10 | 10 | 10 | 10 | 10 | 10 | 10 | 10 | 10 | 10 |
| Acesulfame K | mg/100 g | 30 | 30 | 30 | 30 | 30 | 30 | 30 | 30 | 30 | 30 | 30 |
| Caffeine | mg/100 g | 30 | 30 | 30 | 30 | 30 | 30 | 30 | 30 | 30 | 30 | 30 |
| Citric acid (anhydrous) | g/100 g | 28.8 | 12.7 | 12.7 | 12.7 | 12.7 | 8.1 | 8.1 | 8.1 | 6.2 | 6.2 | 6.2 |
| Trisodium citrate | g/100 g | 9.05 | 3.98 | 3.98 | 3.98 | 3.98 | 2.54 | 2.54 | 2.54 | 1.95 | 1.95 | 1.95 |
| Sensory evaluation item 1 Discomfort with sweetness remaining on tongue | - | 2.0 | 3.0 | 1.5 | 0.3 | 1.5 | 3.0 | 0.5 | 0.5 | 3.0 | 1.5 | 1.5 |
| Sensory evaluation item 2 Refreshing sensation | - | 1.0 | 0.0 | 2.0 | 2.5 | 2.5 | 0.0 | 3.0 | 2.0 | 0.0 | 1.0 | 1.5 |

| | | | | | | | | | | | | |
|---|---|---|---|---|---|---|---|---|---|---|---|---|
| 1) In the table, "0.00" means that the corresponding raw material was not added. | | | | | | | | | | | | |

### Example C: Evaluations of Beverages Using Various Cinnamic Acid Derivatives

### Preparation of Samples

In the same manner as in Example A, sample liquids were prepared by mixing a cinnamic acid or a cinnamic acid derivative, a sweetener, caffeine, citric acid, trisodium citrate, and water in the blending amounts shown in Table 3, and then filling the mixture into a can. The following raw materials were used: trans-cinnamic acid (available from Sigma-Aldrich, trans-cinnamic acid, ≥ 99%, FG), ethyl cinnamate (available from Sigma-Aldrich, ethyl cinnamate, ≥ 98%, stabilized, FCC, FG), cinnamaldehyde (available from Sigma-Aldrich, cinnamaldehyde, natural, ≥ 95%, FG), phenylethyl cinnamate (available from Sigma-Aldrich, phenylethyl cinnamate, ≥ 96%, FG), isoamyl cinnamate (available from Sigma-Aldrich, isoamyl cinnamate, ≥ 97%, FG), isopropyl cinnamate (available from Sigma-Aldrich, isopropyl cinnamate, ≥ 96%, FG), isobutyl cinnamate (available from Sigma-Aldrich, isobutyl cinnamate, ≥ 98%, FCC, FG), methyl cinnamate (available from Sigma-Aldrich, methyl cinnamate, natural, ≥ 98%, FCC, FG), granulated sugar, caffeine, citric acid (anhydrous), trisodium citrate, and water (ion-exchanged water). The raw materials for each sample were compounded and then sterilized at 85°C for 10 minutes, and carbon dioxide gas was injected to give a gas pressure of about 2.0 kgf/cm² at a liquid temperature of 20°C.

### Sensory Evaluations

### Evaluation Method

In the same manner as in Example A, for the samples prepared as described above, four trained expert panelists evaluated the sensory evaluation items 1 and 2. The results are shown in Table 3. The main component of granulated sugar is sucrose; thus, the sweetness intensity of the beverage containing 16 g/100 g of granulated sugar was regarded as 16 (SEV = 16). In addition, the content of each component was calculated from the added amount. The acidity was calculated from a measured value in a preliminary experiment.

**[Table 3]**

| Table 3: Compositions and sensory evaluation results of beverages using various cinnamic acid derivatives | | | | | | | | | | | |
|---|---|---|---|---|---|---|---|---|---|---|---|
| Sample No. | Unit | 22 | 23 | 24 | 25 | 26 | 27 | 28 | 29 | 30 | 31 |
| Acidity | g/100 g | 0.86 | 0.86 | 0.86 | 0.86 | 0.86 | 0.86 | 0.86 | 0.86 | 0.86 | 0.86 |
| trans-Cinnamic acid | mg/100 g | 0.00 | 0.00 | 0.00 | 0.30 | 0.00 | 0.00 | 0.00 | 0.00 | 0.00 | 0.00 |
| Ethyl cinnamate | mg/100 g | 0.00 | 0.00 | 0.00 | 0.00 | 0.30 | 0.00 | 0.00 | 0.00 | 0.00 | 0.00 |
| Cinnamaldehyde | mg/100 g | 0.00 | 0.00 | 0.00 | 0.00 | 0.00 | 0.30 | 0.00 | 0.00 | 0.00 | 0.00 |
| Phenylethyl cinnamate | mg/100 g | 0.00 | 0.00 | 0.00 | 0.00 | 0.00 | 0.00 | 0.30 | 0.00 | 0.00 | 0.00 |
| Isoamyl cinnamate | mg/100 g | 0.00 | 0.00 | 0.00 | 0.00 | 0.00 | 0.00 | 0.00 | 0.30 | 0.00 | 0.00 |
| Isopropyl cinnamate | mg/100 g | 0.00 | 0.00 | 0.00 | 0.00 | 0.00 | 0.00 | 0.00 | 0.00 | 0.30 | 0.00 |
| Isobutyl cinnamate | mg/100 g | 0.00 | 0.00 | 0.00 | 0.00 | 0.00 | 0.00 | 0.00 | 0.00 | 0.00 | 0.30 |
| Methyl cinnamate | mg/100 g | 0.00 | 0.30 | 5.00 | 0.00 | 0.00 | 0.00 | 0.00 | 0.00 | 0.00 | 0.00 |
| Granulated sugar | g/100 g | 16 | 16 | 16 | 16 | 16 | 16 | 16 | 16 | 16 | 16 |
| Caffeine | mg/100 g | 37.5 | 37.5 | 37.5 | 37.5 | 37.5 | 37.5 | 37.5 | 37.5 | 37.5 | 37.5 |
| Citric acid (anhydrous) | g/100 g | 8.1 | 8.1 | 8.1 | 8.1 | 8.1 | 8.1 | 8.1 | 8.1 | 8.1 | 8.1 |
| Trisodium citrate | g/100 g | 2.54 | 2.54 | 2.54 | 2.54 | 2.54 | 2.54 | 2.54 | 2.54 | 2.54 | 2.54 |
| Sensory evaluation item 1 Discomfort with sweetness remaining on tongue | - | 3.0 | 0.5 | 1.8 | 1.5 | 1.5 | 1.5 | 1.5 | 1.5 | 1.5 | 1.3 |
| Sensory evaluation item 2 Refreshing sensation | - | 0.0 | 3.0 | 1.5 | 2.3 | 2.0 | 2.0 | 2.0 | 2.0 | 1.8 | 2.0 |

| | | | | | | | | | | | |
|---|---|---|---|---|---|---|---|---|---|---|---|
| 1) In the table, "0.00" means that the corresponding raw material was not added. | | | | | | | | | | | |

### Example D: Evaluations at Various Acidities

### Preparation of Samples

In the same manner as in Example A, sample liquids were prepared by mixing a cinnamic acid derivative, a sweetener, caffeine, citric acid, trisodium citrate, malic acid, and water in the blending amounts shown in Table 4, and then filling the mixture into a can. The following raw materials were used: methyl cinnamate (available from Sigma-Aldrich, methyl cinnamate, natural, ≥98%, FCC, FG), granulated sugar, caffeine, citric acid (anhydrous), trisodium citrate, malic acid, and water (ion-exchanged water). The raw materials for each sample were compounded and then sterilized at 85°C for 10 minutes, and carbon dioxide gas was injected to give a gas pressure of about 2.0 kgf/cm² at a liquid temperature of 20°C.

### Sensory Evaluations

### Evaluation Method

In the same manner as in Example A, for the samples prepared as described above, four trained expert panelists evaluated the sensory evaluation items 1 and 2. The results are shown in Table 4. The main component of granulated sugar is sucrose; thus, the sweetness intensity of the beverage containing 16 g/100 g of granulated sugar was regarded as 16 (SEV = 16). In addition, the content of each component was calculated from the added amount. The acidity was calculated from a measured value in a preliminary experiment.

**Table 4**

| Table 4: Compositions and sensory evaluation results of beverages with various acidities | | | | | | | |
|---|---|---|---|---|---|---|---|
| Sample No. | Unit | 32 | 33 | 34 | 35 | 36 | 37 |
| Acidity | g/100 g | 0.76 | 0.76 | 0.76 | 0.96 | 0.96 | 0.96 |
| Methyl cinnamate | mg/100 g | 0.00 | 0.15 | 2.00 | 0.00 | 0.15 | 2.00 |
| Granulated sugar | g/100 g | 16 | 16 | 16 | 16 | 16 | 16 |
| Caffeine | mg/100 g | 37.5 | 37.5 | 37.5 | 37.5 | 37.5 | 37.5 |
| Citric acid (anhydrous) | g/100 g | 6.2 | 6.2 | 6.2 | 6.2 | 6.2 | 6.2 |
| Trisodium citrate | g/100 g | 1.95 | 1.95 | 1.95 | 1.95 | 1.95 | 1.95 |
| Malic acid | g/100 g | 1 | 1 | 1 | 3 | 3 | 3 |
| Sensory evaluation item 1 Discomfort with sweetness remaining on tongue | - | 3.0 | 0.5 | 0.5 | 3.0 | 0.5 | 0.5 |
| Sensory evaluation item 2 Refreshing sensation | - | 0.0 | 3.0 | 2.8 | 0.0 | 3.0 | 2.5 |

| | | | | | | | |
|---|---|---|---|---|---|---|---|
| 1) In the table, "0.00" means that the corresponding raw material was not added. | | | | | | | |

### Example E: Evaluations of Caffeine-Free Beverages

### Preparation of Samples

In the same manner as in Example A, sample liquids were prepared by mixing a cinnamic acid derivative, a sweetener, citric acid, trisodium citrate, and water in the blending amounts shown in Table 5, and then filling the mixture into a can. The following raw materials were used: methyl cinnamate (available from Sigma-Aldrich, methyl cinnamate, natural, ≥98%, FCC, FG), granulated sugar, citric acid (anhydrous), trisodium citrate, and water (ion-exchanged water). The raw materials for each sample were compounded and then sterilized at 85°C for 10 minutes, and carbon dioxide gas was injected to give a gas pressure of about 2.0 kgf/cm² at a liquid temperature of 20°C.

### Sensory Evaluations

### Evaluation Method

In the same manner as in Example A, for the samples prepared as described above, four trained expert panelists evaluated the sensory evaluation items 1 and 2. The results are shown in Table 5. The main component of granulated sugar is sucrose; thus, the sweetness intensity of the beverage containing 11 g/100 g of granulated sugar was regarded as 11 (SEV = 11). In addition, the content of each component was calculated from the added amount. The acidity was calculated from a measured value in a preliminary experiment.

**Table 5**

| Table 5: Compositions and sensory evaluation results of caffeine-free beverages | | | | |
|---|---|---|---|---|
| Sample No. | Unit | 38 | 39 | 40 |
| Acidity | g/100 g | 0.20 | 0.20 | 0.20 |
| Methyl cinnamate | mg/100 g | 0.00 | 2.1 | 3.5 |
| Granulated sugar | g/100 g | 11 | 11 | 11 |
| Caffeine | mg/100 g | 0.00 | 0.00 | 0.00 |
| Citric acid (anhydrous) | g/100 g | 2.0 | 2.0 | 2.0 |
| Trisodium citrate | g/100 g | 0.64 | 0.64 | 0.64 |
| Sensory evaluation item 1 Discomfort with sweetness remaining on tongue | - | 3.0 | 1.5 | 1.5 |
| Sensory evaluation item 2 Refreshing sensation | - | 0.0 | 2.0 | 1.8 |

| | | | | |
|---|---|---|---|---|
| 1) In the table, "0.00" means that the corresponding raw material was not added. | | | | |

## Claims

1. A beverage comprising:
a cinnamic acid, a cinnamic acid derivative, or a combination thereof;
an acidulant; and
a sweetener, wherein
a content of at least one of the cinnamic acid, thecinnamic acid derivative, or the combination thereof is from 0.01 to 4 mg/100 g, and
an acidity is from 0.65 to 2.5 g/100 g in terms of citric acid.

2. A beverage comprising:
a cinnamic acid, a cinnamic acid derivative, or a combination thereof;
an acidulant; and
a sweetener, wherein
a content of at least one of the cinnamic acid, the cinnamic acid derivative, or the combination thereof is from 2.1 to 4 mg/100 g, and
an acidity is from 0.20 to 0.65 g/100 g in terms of citric acid.

3. The beverage according to claim 1, wherein
a content of at least one of the cinnamic acid, the cinnamic acid derivative, or the combination thereof is from 0.15 to 2 mg/100 g, and
an acidity is from 0.65 to 1 g/100 g in terms of citric acid.

4. The beverage according to any one of claims 1 to 3, wherein the beverage has a sweetness intensity of 3 to 20 in terms of sucrose equivalent value.

5. The beverage according to claim 1, 3, or 4, comprising one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, wherein a total content of the one or more of the cinnamic acid, the cinnamic acid derivative, or the combination thereof is 0.01 mg/100 g or more and less than 5 mg/100 g.

6. The beverage according to claim 2 or 4, comprising one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, wherein a total content of the one or more of the cinnamic acid, the cinnamic acid derivative, or the combination thereof is 2.1 mg/100 g or more and less than 5 mg/100 g.

7. The beverage according to any one of claims 1 to 6, further comprising 5 mg/100 g or more of caffeine.

8. The beverage according to any one of claims 1 to 7, further comprising 0.4 mg/100 g or more of vitamin B2.

9. The beverage according to any one of claims 1 to 8, further comprising 0.1 mg/100 g or more of vitamin B6.

10. The beverage according to any one of claims 1 to 9, wherein the beverage is a carbonated beverage, an energy beverage, or a fruit juice beverage.

11. The beverage according to any one of claims 1 to 10, comprising citric acid.

12. The beverage according to any one of claims 1 to 11, wherein the beverage is a packaged beverage.

13. A method for alleviating discomfort with sweetness remaining on the tongue, the method comprising:
adding, to a beverage including a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 mg/100 g or more and less than 5 mg/100 g based on a total weight of the beverage; and
adding an acidulant to the beverage such that the beverage has an acidity of 0.65 to 2.5 g/100 g in terms of citric acid.

14. A method for improving refreshing sensation, the method comprising:
adding, to a beverage including a sweetener, one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate, in an amount of 0.01 mg/100 g or more and less than 5 mg/100 g based on a total weight of the beverage; and
adding an acidulant to the beverage such that the beverage has an acidity of 0.65 to 2.5 g/100 g in terms of citric acid.

15. A beverage comprising:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, wherein
a content of the one or more of the cinnamic acid, the cinnamic acid derivative, or the combination thereof is 0.01 mg/100 g or more and less than 5 mg/100 g, and
an acidity is from 0.65 to 2.5 g/100 g in terms of citric acid.

16. A beverage comprising:
one or more of a cinnamic acid, a cinnamic acid derivative, or a combination thereof, selected from the group consisting of methyl cinnamate, ethyl cinnamate, cinnamaldehyde, trans-cinnamic acid, phenylethyl cinnamate, isoamyl cinnamate, isopropyl cinnamate, and isobutyl cinnamate;
an acidulant; and
a sweetener, wherein
a content of the one or more of the cinnamic acid, the cinnamic acid derivative, or the combination thereof is 2.1 mg/100 g or more and less than 5 mg/100 g, and
an acidity is from 0.20 to 0.65 g/100 g in terms of citric acid.
